# EUROPÄISCHE PATENTSCHRIFT

(11) **EP 0 386 438 B1**
(45) Veröffentlichungstag und Bekanntmachung des Hinweises auf die Patenterteilung: **10.11.1993**
(21) Anmeldenummer: 90101664.2
(22) Anmeldetag: 27.01.1990
(51) Int. Cl.: G01B 7/28, G01B 7/02

(54) **Messeinrichtung zur berührungsfreien Erfassung der Gestalt von Bauteilen**
Measuring device for contactless detection of the shape of work pieces
Dispositif de mesure pour la détection sans contact de la forme de composants

(30) Priorität: 24.02.1989 DE 3905744
(43) Veröffentlichungstag der Anmeldung: 12.09.1990
(73) Patentinhaber: ROBERT BOSCH GMBH, 70442 Stuttgart (DE)
(72) Erfinder: Dobler, Klaus, Dr. Dipl.-Ing., D-7016 Gerlingen (DE); Hachtel, Hansjörg, Dipl.-Ing., D-7251 Weissach (DE)

(56) Entgegenhaltungen:
- EP-A- 0 283 650

## Beschreibung

### Stand der Technik

Die Erfindung geht aus von einer Meßeinrichtung zur berührungsfreien Erfassung der Gestalt von metallischen schraubenförmigen Bauteilen nach der Gattung des unabhängigen Anspruchs. Es ist z.B.aus der EP-A-0283650 bereits eine derartige Meßeinrichtung bekannt, bei der die Gestalt von Schrauben mit Hilfe von mit hochfrequentem Wechselstrom durchflossenen Spulen bestimmt wird. Das Meßprinzip beruht auf der Änderung der Impedanz der Spulen, wenn sich die Form der Bauteile ändert. Diese Spulen erfassen integral über ihre gesamte Länge oder über einen Teilbereich den Abstand zwischen der Spule und dem Bauteil. Dabei besteht die Möglichkeit, daß unterschiedliche Schraubenfehler eine gegensätzliche Wirkung bei der Wirbelstromerzeugung hervorrufen. Dadurch kompensieren sich die beiden Meßsignale, und die Meßeinrichtung würde ein Meßsignal für eine fehlerfreie Schraube liefern, trotz fehlerhafter Form der Schraube. Dies wäre der Fall, wenn die zu messende Schraube einen zu groBen Gewindedurchmesser aufweist und die Gewindelänge zu kurz ist oder wenn das Gewinde eine zu enge Steigung und gleichzeitig einen zu geringen Außengewindedurchmesser besitzt.

### Vorteile der Erfindung

Die erfindungsgemäße Einrichtung mit den kennzeichnenden Merkmalen des Hauptanspruchs hat demgegenüber den Vorteil, daß in den meisten Fällen die Gestalt der Schrauben fehlerfrei ermittelt wird. Insbesondere wird die Zahl der Fehlmessungen, die durch gleichzeitig auftretende und sich in ihrer Wirkung kompensierende Meßfehler begründet sind, weitgehend reduziert. Die Genauigkeit der Messung und deren Aussagegehalt wird dadurch wesentlich verbessert. Bei der Meßeinrichtung kann jede beliebige Spulenform verwendet werden. Es ist auch möglich, eine zylinderförmige Spule zu verwenden, wobei die Schraube an der Spule vorbeigeführt wird. Auf die Präzision der Spulenwicklung selbst brauchen nur geringe Anforderungen gestellt zu werden. In besonders einfacher Weise können hierzu handelsübliche Drosselspulen verwendet werden, um die Gewindekonturmessung zuverlässig durchzuführen.

Durch die in den abhängigen Ansprüchen aufgeführten Maßnahmen sind vorteilhafte Weiterbildungen und Verbesserungen der im Hauptanspruch angegebenen Meßeinrichtung möglich.

### Zeichnung

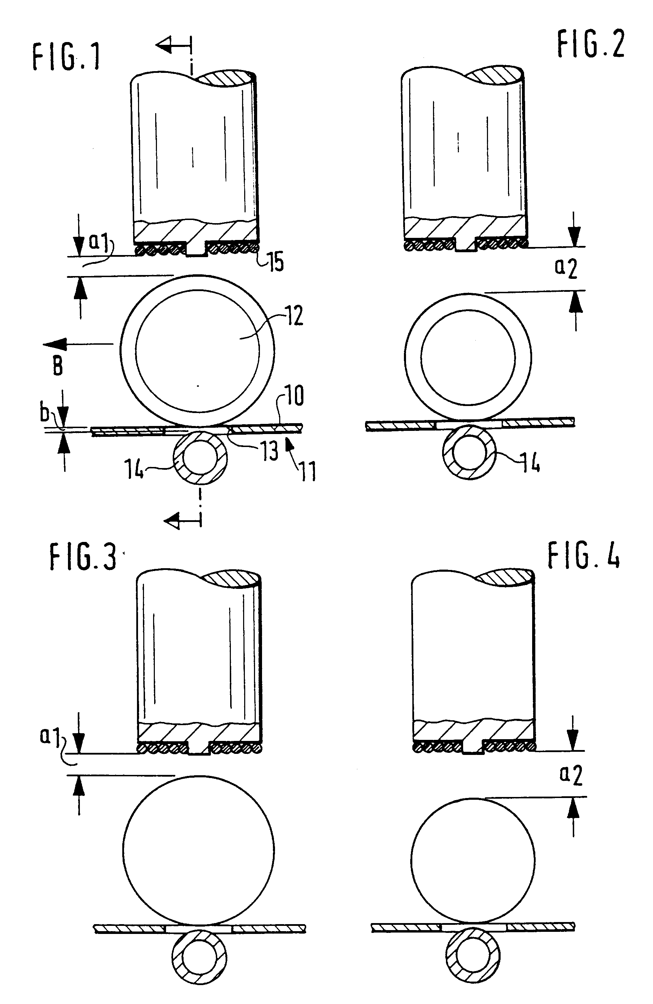

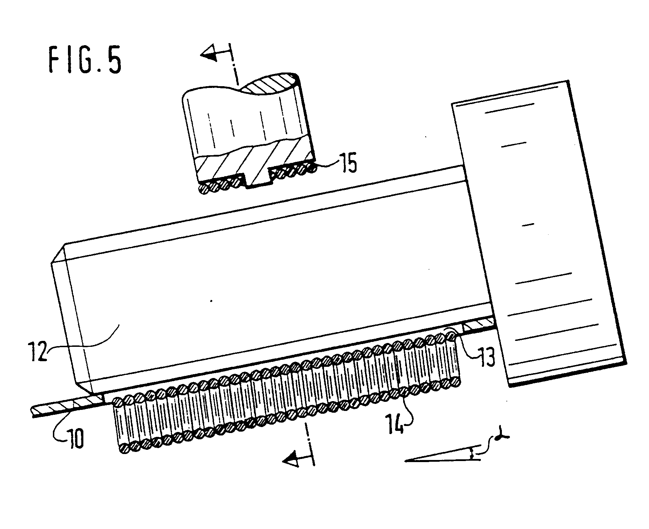

Ein Ausführungsbeispiel der Erfindung ist in der Zeichnung dargestellt und in der nachfolgenden Beschreibung näher erläutert. Es zeigen die Figuren 1 bis 4 je eine Seitenansicht der Laufschiene eines Förderers mit unterschiedlicher Schraubengestalt und Figur 5 ein Schnittbild der Figur 1.

### Beschreibung des Ausführungsbeispiels

In der Figur 1 ist mit 10 eine Laufschiene eines Förderers 11 bezeichnet, an der eine zu bestimmende Schraube 12 aus ferromagnetischem oder nicht ferromagnetischem, jedoch elektrisch leitendem Material entlang gleitet. Die Laufschiene 10 kann aus jedem Material hergestellt sein. Besteht sie aus metallischem Werkstoff, so ist ein Fenster 13 zweckmäßig. Im Bereich dieses Fensters 13 ist eine Spule 14 angeordnet, die das Gewinde der Schraube 12 überprüft. Auf der gegenüberliegenden Seite ist eine zweite Spule 15 vorgesehen, die den Durchmesser der Schraube 12 bestimmt. Für das Meßverfahren ist es nicht unbedingt notwendig, daß die beiden Spulen diametral gegenüberliegend angeordnet sind. Wichtig ist es, daß der Abstand b zwischen der Schraube 12 und der Spule 14 immer gleich groß ist. Hierzu kann z.B. die Laufschiene 10 des Förderers 11 unter einem bestimmten Winkel α geneigt sein, so daß die Schrauben 12, bedingt durch die Schwerkraft, auf der Laufschiene gleiten oder rollen können. Die Spule 14 ist in den Figuren als zylinderförmig gewickelte Spule und die Spule 15 als kreis-, oval- oder rechteckförmig gewickelte Flachspule dargestellt. Die Symmetrieachse der Zylinderspule 14 verläuft parallel zu den Symmetrieachsen der zu messenden Schrauben 12. Für das Meßprinzip selbst ist keine besondere Form der Spule 14 bzw. 15 notwendig. Ferner können die die Schrauben 12 überwachenden Spulen 14, 15 auch zeitlich voneinander getrennt angeordnet sein. Für eine rationelle Gestaltung einer Meßeinrichtung sollten die beiden Spulen 14, 15 aber diametral gegenüber angeordnet sein.

Bei Inbetriebnahme des Förderers 11 werden die Schrauben 12 nacheinander in Pfeilrichtung B zwischen den beiden Spulen 14, 15 hindurchgeführt. Werden dabei die Spulen 14, 15 von einem hochfrequenten Wechselstrom durchflossen, so entstehen dadurch an den Spulen 14, 15 magnetische Wechselfelder. Diese bewirken auf den metallischen Oberflächen der Gewindeschäfte der Schrauben 12 Wirbelströme. Zur Vereinfachung wird im folgenden nur die Messung von Schrauben, die aus elektrisch leitfähigem, jedoch nicht ferromagnetischem Stoff bestehen, so daß sich dort lediglich der Wirbelstromeffekt ausbildet, beschrieben. Je größer dabei die vom Magnetfeld durchsetzte Fläche der Schäfte ist, desto mehr Wirbelströme werden erzeugt. Ferner ist die Größe der erzeugten Wirbelströme abhängig von der Gewindeform sowie vom Abstand der Spulen 14, 15 zu den Oberflächen der Schäfte. Deshalb ist es für eine genaue Fehlerbestimmung notwendig, daß der Abstand b zwischen der Spule 14 und dem Gewindeschaft während der Messung immer gleich groß ist. Durch die erzeugten Wirbelströme wird der Spulen-Wechselstromwiderstand verringert, was eine Verkleinerung der an den Spulen 14, 15 anliegenden Spannung bewirkt. Die Spule 14 dient zur Überprüfung des Gewindes der Schraube 12. Da der Abstand zur Schraube 12 immer gleich ist, können Änderungen des Wechselstromwiderstands im wesentlichen nur auf einer Abweichung der Form des Gewindes beruhen. Hat die Schraube 12 z.B. eine andere Steigung als die Eichschraube, oder ist das Gewinde an einer oder mehreren Stellen beschädigt, treten dadurch Änderungen des Wechselstromwiderstands auf. Das Meßsignal weicht vom vorgegebenen Sollwert ab. Mit Hilfe der anderen Spule 15 wird bevorzugt der Durchmesser der Schraube 12 bestimmt. Abhängig vom Abstand a₁ zwischen der Spule 15 und der Schraube 12 erhält man ein bestimmtes Meßsignal. Dieses Meßsignal ist aber auch abhängig von der Gewindeform. d.h. der Steigung und der Schnittiefe des Gewindes, da sich die Wirbelströme auf der gesamten Oberfläche des Gewindes ausbilden. Durch den festen Abstand zur Wand 10 ist es häufig möglich, dem jeweiligen Meßsignal auch einen entsprechenden Größenwert zuzuordnen, wie an nachfolgenden Beispielen erläutert wird:

Wird der Abstand a₁ vergrößert, so daß sich wie in Figur 2 dargestellt, der Abstand a₂ ergibt, so bewirkt dies eine Verminderung der in der Oberfläche der Schraube 12 erzeugten Wirbelströme und damit eine Vergrößerung des Widerstandswerts der Spule 15. Da in den Figuren 1 und 2 die Gewindeform jeweils ähnlich ausgebildet ist, würde die Spule 14 auch jedes Mal nahezu dasselbe Meßsignal ergeben. Die Spule 15 hingegen erzeugt in den Figuren 1 und 2 unterschiedliche Meßsignale. Dadurch ist es möglich, den Fehler der Schraube 12 exakt zu erkennen und einer Fehlerklasse zuzuordnen. Ist die Spule 14 in der bevorzugten Ausbildungsform zylinderförmig ausgebildet, so bilden sich die Wirbelströme nur in den Oberflächenbereichen des Schafts der Schraube 12 aus, die sich in der Nähe der Spule 14 befinden. Da die Spule 14 sich als zylinderförmige Ausbildung ungefähr über die gesamte Schaftlänge erstreckt (Figur 5), wird die gesamte Länge des Gewindes vermessen. Die Meßsignale beider Spulen 14, 15 werden in einer nicht dargestellten Auswerteschaltung digital ausgewertet und durch eine elektrische UND-Schaltung miteinander verknüpft.

In den Figuren 3 und 4 ist das Meßprinzip dargestellt, wenn zwar der Durchmesser der Schraube 12 richtig ist, d.h. der Abstand a₁ ist gleich, aber kein Gewinde vorhanden ist. In diesem Fall würden die Spulen 14 und 15 ein Fehlsignal messen. Obwohl bei der Ausbildung nach Figur 3 die Abstände a₁ und b zur Figur 1 gleich groß sind, bilden sich durch das fehlende Gewinde mehr Wirbelströme aus. In der Figur 4 ist eine Schraube ohne Gewinde und mit einem der Figur 2 entsprechenden Durchmesser, d.h. Abstand a₂ zur Spule 15, dargestellt. Die Spule 14 würde ein dem Ausführungsbeispiel nach Figur 3 entsprechendes Fehlsignal liefern. Die Spule 15 könnte ein der Figur 1 entsprechendes Meßsignal liefern, da sich die den Wirbelstromeffekt bewirkenden Effekte der Abstandsveränderung und der Oberflächenveränderung gegenseitig kompensieren können. Da aber eines der beiden Meßsignale der Spulen 14, 15 vom Sollwert abweicht, kann die Schraube 12 als fehlerhaft erkannt und aussortiert werden.

Sinngemäß dieselben Vorteile bringt diese Meßeinrichtung auch, wenn die Schrauben ganz oder teilweise aus ferromagnetischem Material bestehen. Zusätzlich zum Wirbelstromeffekt wird hier der ferromagnetische Effekt ausgenutzt, d.h. die Beeinflussung des elektromagnetischen Wechselfeldes der Spule durch die ferromagnetischen Eigenschaften des Schraubenmaterials.

## Patentansprüche

1. Meßeinrichtung zur berührungsfreien Erfassung der Gestalt von insbesondere schraubenförmigen Bauteilen, die mindestens teilweise aus elektrisch leitendem Material bestehen, wobei die Meßeinrichtung mindestens zwei gegenüberliegende, von Wechselstrom durchflossene Spulen (14, 15) aufweist, zwischen denen ein zu vermessendes Bauteil (12) hindurchbewegt werden kann, dadurch gekennzeichnet, daß die Meßeinrichtung eine Kante (10) aufweist, entlang der das zu vermessende Bauteil (12) geführt werden kann, so daß der Abstand zwischen dem Bauteil (12) und mindestens einer ersten Spule (14) während des Meßvorgangs konstant ist.

2. Meßeinrichtung nach Anspruch 1, dadurch gekennzeichnet, daß die Kante (10) Teil einer Fördervorrichtung für das Bauteil (12) ist.

3. Meßeinrichtung nach Anspruch 1 und/oder 2, dadurch gekennzeichnet, daß die Kante (10) mindestens ein Fenster (13) aufweist und daß sich im Bereich dieses Fensters (13) die erste Spule (14) befindet.

4. Meßeinrichtung nach einem der Ansprüche 1 bis 3, dadurch gekennzeichnet, daß die erste Spule (14) eine Zylinderspule ist.

5. Meßeinrichtung nach einem der Ansprüche 1 bis 4, dadurch gekennzeichnet, daß die Spulen (14, 15) diametral gegenüberliegend angeordnet sind.

6. Meßeinrichtung nach einem der Ansprüche 1 bis 5, dadurch gekennzeichnet, daß die Meßsignale der Spulen (14, 15) in einer Auswerteschaltung digital ausgewertet und in einer elektrischen UND-Schaltung miteinander verknüpft werden.

## Claims

1. Measuring device for the non-contact recording of the shaping of in particular helical components, which are composed at least partially of electrically conductive material, in which the measuring device exhibits at least two opposite coils (14, 15), through which alternating current flows and between which a component (12) to be measured can be passed through, characterised in that the measuring device exhibits an edge (10), along which the component (12) to be measured can be guided, so that the spacing between the component (12) and at least one first coil (14) is constant during the measurement operation.

2. Measuring device according to Claim 1, characterised in that the edge (10) is part of a conveyor device for the component (12).

3. Measuring device according to Claim 1 and/or 2, characterized in that the edge (10) exhibits at least one window (13), and in that the first coil (14) is situated in the region of this window (13).

4. Measuring device according to one of Claims 1 to 3, characterised in that the first coil (14) is a cylindrical coil.

5. Measuring device according to one of Claims 1 to 4, characterised in that the coils (14, 15) are disposed so as to be diametrically opposite.

6. Measuring device according to one of Claims 1 to 5, characterised in that the measurement signals of the coils (14, 15) are digitally evaluated in an evaluating circuit and are linked to one another in an electrical AND gate.

## Revendications

1. Dispositif de mesure pour détecter sans contact la forme de pièces détachées en particulier ayant la forme de vis, qui au moins partiellement sont en une matière électriquement conductrice, le dispositif de mesure présentant au moins deux bobines (14, 15) parcourues par du courant alternatif, entre lesquelles on peut faire passer une pièce détachée (12) à mesurer, dispositif de mesure caractérisé en ce que le dispositif de mesure présente un bord (10), le long duquel on peut faire passer la pièce détachée (12) à mesurer, de telle sorte que la distance entre la pièce détachée (12) et au moins une première bobine (14) soit constante pendant le processus de mesure.

2. Dispositif de mesure selon la revendication 1, caractérisé en ce que le bord (10) fait partie d'un dispositif de transport de la pièce détachée (12).

3. Dispositif de mesure selon la revendication 1 ou 2, caractérisé en ce que le bord (10) présente une fenêtre (13) et la première bobine (14) se trouve dans la zone de cette fenêtre (13).

4. Dispositif de mesure selon l'une des revendications 1 à 4, caractérisé en ce que la première bobine (14) est une bobine cylindrique.

5. Dispositif de mesure selon l'une des revendications 1 à 4, caractérisé en ce que les bobines (14, 15) sont disposées diamétralement en regard l'une de l'autre.

6. Dispositif de mesure selon l'une des revendications 1 à 4, caractérisé en ce que les signaux de mesure des bobines (14, 15) sont exploités de façon numérique dans un circuit d'exploitation et sont combinés dans une porte ET.
